# EUROPÄISCHE PATENTSCHRIFT

(11) **EP 1 532 053 B1**
(45) Veröffentlichungstag und Bekanntmachung des Hinweises auf die Patenterteilung: **14.10.2009**
(21) Anmeldenummer: 03788694.2
(22) Anmeldetag: 26.08.2003
(51) Int. Cl.: B65D 1/24, B65D 1/22, B65D 85/30, B29C 45/16

(54) **FLASCHENKASTEN UND HERSTELLVERFAHREN**
BOTTLE CRATE AND METHOD FOR MANUFACTURING IT
CASIER À BOUTEILLES ET SON PROCÉDÉ DE FABRICATION

(30) Priorität: 27.08.2002 DE 10239319
(43) Veröffentlichungstag der Anmeldung: 25.05.2005
(73) Patentinhaber: Schoeller Arca Systems GmbH, 19057 Schwerin (DE); Robust Plastics GmbH, 1220 Wien (AT)
(72) Erfinder: OSTER, Heinz, 82319 Starnberg (DE); LENZ, Thorsten, 14055 Berlin (DE); LANG, Martin, 3003 Gablitz (AT); BEINHUNDNER, Johann, 5233 Pischelsdorf (AT)
(74) Vertreter: Bockhorni & Kollegen
(86) Internationale Anmeldenummer: PCT/EP2003/009444
(87) Internationale Veröffentlichungsnummer: WO 2004/024575

(56) Entgegenhaltungen:
- EP-A- 0 490 165
- EP-A- 0 770 552
- EP-A- 1 000 865
- DE-A- 10 208 845
- DE-A- 19 505 094
- DE-A- 19 936 229
- DE-U- 20 218 154
- FR-A- 2 580 983
- US-A- 3 506 154
- US-A- 4 754 892
- US-B1- 6 330 956

## Beschreibung

Die vorliegende Erfindung betrifft einen Flaschenkasten bzw. ein Verfahren zur Herstellung eines Flaschenkastens.

Flaschenkästen werden in zahlreichen Bereichen des Lebens vielfältig eingesetzt. Neben den üblichen funktionellen Aufgaben, die derartige Kästen zu erfüllen haben, wie die sichere Aufnahme von Flaschen werden an derartige Kästen zunehmend weitere und dadurch auch komplexere Anforderungen gestellt. So treten neben die ursprüngliche Aufgabe als Behältnis auch Anforderungen hinsichtlich Bedienbarkeit, Komfort bei der Handhabung sowie ästhetischem Gesamteindruck, insbesondere wenn es sich bei dem Behälter um einen Verkaufsbehälter bzw. eine Verkaufsverpackung handelt, wie dies beispielsweise auch bei Flaschenkästen der Fall ist. Hier ist es erforderlich eine ganze Reihe von Anforderungen, die teilweise einander widerstrebend sind, gleichzeitig zu erfüllen. So sollen beispielsweise bei Flaschenkästen neben der einfachen Herstellbarkeit, der Robustheit beim Gebrauch, der sicheren Aufnahme der Flaschen usw. auch Anforderungen hinsichtlich einer guten designerischen Gestaltung und einer komfortablen Handhabung erfüllt werden, wie dies beispielsweise die bereits bekannten teilbaren Flaschenkästen hinsichtlich der Tragbarkeit erfüllen.

Den Gestaltungsmöglichkeiten sind aber insbesondere unter Berücksichtigung einer wirtschaftlichen Herstellung und der erforderlichen Robustheit im Alltagsgebrauch enge Grenzen gesetzt. So ist es beispielsweise zur Erzielung der erforderlichen Robustheit nach dem Stand der Technik ermöglicht, insbesondere Flaschenkästen aus einem einzigen Material herzustellen, wobei der Flaschenkasten dann einstückig oder durch Verschweißen mehrerer einzelner Teile aus diesem Material hergestellt ist. Zur Optimierung der Handhabbarkeit bzw. zur Gestaltung des äußeren Erscheinungsbildes bleiben dann nur noch wenige Möglichkeiten. So ist es bezüglich der Gestaltung des Erscheinungsbildes aus dem Stand der Technik lediglich bekannt, Flaschenkästen mit entsprechenden Markenbezeichnungen bzw. Symbolen der Brauereien bzw. der Getränkehersteller zu bedrucken. Außerdem wurden einige konstruktive Verbesserungen hinsichtlich der Handhabbarkeit vorgenommen, wie z. B. die besondere Gestaltung des Griffbereichs bzw. die Zerteilung des Kastens in verschiedene, einzeln zu tragende und wieder zu einem Gesamtkasten zusammensetzbare Teile. Die EP 0 770 552 A1 zeigt Kästen mit zusätzlich angespritztem Kunststoff, die mit dem Problem eines unscharfen Übergangsbereichs zwischen den Kunststoffen behaftet ist. Die US 6,330,956 B1 beschreibt eine Kunststoffschüssel als Futternapf mit angespritztem rutschfestem Sockelboden. Durch ein Aufnahmereservoir in Form einer Nut im Napfbereich und Steuern des Gießdruckes wird überschüssiges Material in der Nut aufgetragen.

Diese zweifelsohne gegebenen Möglichkeiten der Gestaltung und die erzielten Verbesserungen bei der Handhabbarkeit von Kunststoffbehältern, insbesondere Flaschenkästen, sind jedoch bei weitem nicht ausreichend.

Es ist deshalb Aufgabe der vorliegenden Erfindung einen Flaschenkasten bereitzustellen, der eine saubere scharfe Abschlusskante für den bereichsweise angespritzten Kunststoffschafft und damit ein sauberes äußeres Erscheinungsbild im Übergangsbereich des angespritzen Kunststoffs gewährleistet und bei leichter Herstellbarkeit und ausreichender Robustheit für den Alltagsgebrauch einen höheren Komfort für den Nutzer und bessere designerische Gestaltungsmöglichkeiten erlaubt.

Diese Aufgabe wird gelöst durch einen Flaschenkasten mit den Merkmalen des Anspruchs 1 bzw. ein Verfahren mit den Merkmalen des Anspruchs 13. Vorteilhafte Ausgestaltungen sind Gegenstand der abhängigen Ansprüche.

Ausgangspunkt der vorliegenden Erfindung ist die Erkenntnis, dass die Gestaltungsmöglichkeiten für einen Flaschenkasten, in jeder Hinsicht gesteigert werden können, wenn der Flaschenkasten in einfacher Weise nicht nur aus einem einzigen Kunststoffmaterial gefertigt wird, sondern wenn verschiedene Materialien mit unterschiedlichen Eigenschaften, z. B. hinsichtlich ihrer physikalischen und chemischen Eigenschaften wie Elastizität, Härte, Festigkeit, Farbe usw., eingesetzt werden können. Die Verwendung mindestens eines zweiten oder auch von mehreren zusätzlichen unterschiedlichen Kunststoffen ermöglicht nämlich einerseits eine Vielfalt von Designgestaltungen als auch den Einsatz des passenden Kunststoffmaterials entsprechend des Anforderungsprofils für verschiedene Bereiche des Flaschenkastens. So können einerseits insbesondere die Wandbereiche aus unterschiedlich farbigen Kunststoffen aufgebaut sein, so dass ästhetische Gestaltungen oder farblich abgesetzte Bereiche für die Anbringung von Labels oder das direkte Ausbilden von farbigen Labels mittels der zusätzlichen Kunststoffe möglich werden. Andererseits ermöglicht es die gezielte Kunststoffwahl für unterschiedliche Bereiche, beispielsweise im Griffbereich eines Flaschenkastens, ein weicheres, elastisches Kunststoffmaterial vorzusehen, welches ein weiches Griffverhalten aufweist. Mit der Maßgabe der Erfindung sind somit völlig neue Gestaltungsmöglichkeiten im Bereich von Flaschenkästen, eröffnet. Die bisherige Beschränkung im Stand der Technik auf einen einzigen Kunststoff für einen gesamten einen Flaschenkasten oder zumindest die Beschränkung auf einen einzigen Kunststoff für einzelne, beweglich miteinander verbundene Teile hiervon ist damit überwunden. Vielmehr können nach der vorliegenden Erfindung auch starr, dicht und fest zueinander angeordnete Elemente, insbesondere Wandbereiche aus unterschiedlichen Kunststoffen gefertigt werden. Die Gestaltungsmöglichkeiten und Einsatzmöglichkeiten werden dadurch maßgeblich erhöht. Beim angeformten, insbesondere an- oder aufgespritzten Kunststoff kann es sich um dasselbe Kunststoffmaterial wie das Material des Kastens, handeln, wobei jedoch vorzugsweise dieses Kunststoffmaterial andere Eigenschaften, etwa Transparenz, aufweisen kann.

Das stoffschlüssige Verbinden von mindestens zwei oder mehreren Kunststoffen erfolgt dadurch, dass der zweite Kunststoff auf den zumindest ersten Kunststoff auf- oder angespritzt wird, wobei Aufspritzen hierbei insbesondere bedeutet, dass ein dünner, flächiger, vorzugsweise auch großflächiger Auftrag des zweiten Kunststoffs in Art einer Beschichtung auf den ersten Kunststoff erfolgt.

Auch ein kantenartiges Anspritzen, etwa Stoß auf Stoß ist möglich, etwa um Seitenabschnitt mit unterschiedlichen Materialien auszubilden, wobei die Wandabschnitte mit unterschiedlichem Material Stoß auf Stoß aneinander anschließen. Zur Intensivierung des Anschlusses ist ein verzahnender Eingriff möglich. Auf diese Weise können etwa die Seitenwände eines Kastens transparent und die Eckbereiche opak ausgebildet werden.

Bei dem flächigen, dünnen Auftragen des zweiten Kunststoffs mittels Aufspritzen beträgt die Schichtdicke des aufgespritzten Kunststoffs vorzugsweise einige Millimeter, insbesondere ist die Schichtdicke des aufgespritzten Kunststoffs im Bereich von 0,1 mm bis 10 mm, vorzugsweise 0,5 mm bis 5 mm.

Vorzugsweise kann der flächig aufgespritzte Kunststoff nicht nur auf einer Seite der Seitenwand aufgespritzt sein, sondern auch beidseitig und hierbei wieder insbesondere beidseitig im Bereich einer Griffmulde, so dass ein Griffteil aus dem zweiten Kunststoff entsteht, welches lediglich eine dünne Beschichtung aus dem aufgespritzten Kunststoff umfasst.

Durch Verwendung eines geeigneten Materials kann hierdurch der Tragekomfort für einen Flaschenkasten deutlich erhöht werden, wenn nämlich als Kunststoffmaterial für den aufgespritzten Kunststoff, aus dem die Kunststoffbeschichtung im Griffbereich hergestellt wird, aus einem elastischen und weichen Material gewählt wird. Dann ergibt sich ein sogenannter "Softtouch" welcher zu einem angenehmen Trageverhalten führt.

Der zweite Kunststoff wird in einem Bereich auf den ersten Kunststoff aufgespritzt, der durch eine Dichtleiste begrenzt ist, und zwar durch eine hervorstehenden Dichtlippe. Diese Maßnahme ermöglicht eine eindeutige Begrenzung des Aufspritzbereichs und erlaubt somit saubere, scharfe Abschlusskanten für den aufgespritzten Kunststoff.

In dem Aufspritzbereich für den zweiten Kunststoff können Rippen- oder Lamellenstrukturen vorhanden sein, die einerseits die Steifigkeit oder Festigkeit des Flaschenkastens aus dem ersten Kunststoff erhöhen, wobei dann durch Auffüllen mit dem zweiten Kunststoff wiederum eine glatte, saubere Oberfläche erzielt werden kann, die insbesondere im Bereich der Griffmulde ebenfalls einen höheren Tragekomfort für den Nutzer darstellt, wenn der Nutzer den Kasten in diesem Bereich erfassen muss. Darüber hinaus dient eine derartige Verzahnung des aufgespritzten zweiten Kunststoffs mit einer Rippen- und Lamellenstruktur bzw. in dem ersten Kunststoffteil vorgesehenen Öffnungen dazu, die Haftfestigkeit des zweiten Kunststoffs auf dem ersten Kunststoff zu erhöhen. Durch die Öffnungen, die etwa auch im Bereich der Verrippung vorgesehen sein können, wird auch eine gute Verankerung eines beidseitig aufgebrachten Kunststoffs auf dem ersten Kunststoff gewährleistet. Entsprechend können hierfür auch weitere Mittel zur Verzahnung der beiden Kunststoffe, wie z. B. ineinander greifende Rippen, Zähne und dergleichen vorgesehen sein. Dies ist jedoch nicht nur für eine stoffschlüssige Verbindung von erstem und zweitem Kunststoff durch Aufspritzen des zweiten Kunststoffs auf den ersten Kunststoff vorteilhaft, sondern auch bei den vorher genannten anderen Verbindungstechniken.

Besonders bevorzugt ist es, im ersten Kunststoff, insbesondere beim Aufspritzen eines zweiten Kunststoffs im Bereich einer Griffmulde, einen Angusskanal vorzusehen, beispielsweise im Bereich des Griffstegs, durch den der zweite Kunststoff eingespritzt werden kann. Dies hat sich insbesondere dann bewährt, wenn der Kunststoff beidseitig der Griffmulde aufgespritzt werden soll und die Spritzgussform von beiden Seiten die Wandung umschließt. Dann eröffnet das Vorsehen eines Angusskanals im ersten Kunststoff die Möglichkeit den zweiten Kunststoff einfach von oben aufzubringen, ohne an der Spritzgussform einen entsprechenden Angusskanal vorsehen zu müssen. Die Austrittsöffnungen des Angusskanals befinden sich dann selbstverständlich in den Bereichen auf beiden Seiten der Wandung, die mit dem zweiten Kunststoff versehen werden soll.

Ein wichtiger Aspekt der vorliegenden Erfindung stellt die Ausbildung eines Griffteils mit einem zweiten, insbesondere weicheren und elastischeren Werkstoff dar, der einen besonderen Tragekomfort durch das besondere Griffverhalten erzeugt.

Vorteilhaft ist bei einer derartigen Ausgestaltung auch, wenn zusätzlich die Oberfläche des Griffteils bzw. der Griffmulde entsprechend den Handformen angepasst ist, wobei eine maßgeblich glatte Oberfläche bevorzugt ist.

Die oben angesprochenen Unterschiede zwischen dem zumindest einen ersten Kunststoff und dem zumindest zweiten Kunststoffs können sich auf alle chemischen und/oder physikalischen Eigenschaften beziehen, insbesondere auf Härte, Dehnbarkeit, Festigkeit, Farbe, Zusammensetzung und dergleichen.

Das bevorzugte Aufbringen des zweiten Kunststoffs auf den ersten Kunststoff mittels Aufspritzen erfolgt erfindungsgemäß in einfacher Weise dadurch, dass ein Halbfabrikat, also ein fertiger Kunststoffbehälter bzw. entsprechendes Behälterteil aus dem ersten Kunststoff derart gegenüber einer Spritzgussform angeordnet wird, dass ein Hohlraum entsteht, in den der zweite unterschiedliche Kunststoff eingespritzt werden kann. Der Hohlraum kann dabei entweder durch die Spritzgussform an sich bereit gestellt werden, wobei der Kastenteil aus dem ersten Kunststoff dann selbst einen Teil der Spritzgussform darstellt, so dass der Hohlraum zwischen der Spritzgussform und dem ersten Kunststoff entsteht. Wenn der zweite Kunststoff dann in diesen Hohlraum eingespritzt worden ist, kann der fertig hergestellte Kasten von der Spritzgussform getrennt werden, sofern bereits der zweite Kunststoff formstabil ist und ausreichend fest an dem ersten Kunststoff anhaftet.

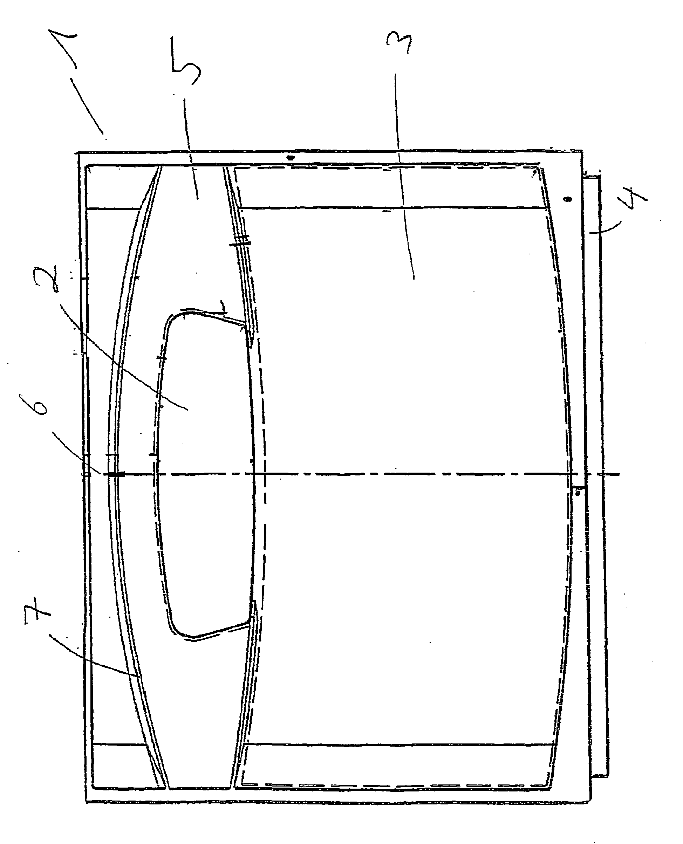

Weitere Vorteile, Kennzeichen und Merkmale der vorliegenden Erfindung werden bei der nachfolgenden detaillierten Beschreibung eines bevorzugten Ausführungsbeispiels anhand der beigefügten Zeichnung deutlich. Die einzige, rein schematische Figur zeigt hierbei eine Seitenwand eines erfindungsgemäßen Flaschenkastens.

Die Seitenansicht der einzigen Figur zeigt eine Seitenwand 3 eines Flaschenkastens 1, bei dem in der Seitenwand 3 eine Griffausnehmung 2, eine sogenannten Griffmulde, vorgesehen ist. Außerdem ist in der Seitenansicht auch ein Teil des Bodens 4 des Flaschenkastens 1 zu sehen.

Der Flaschenkasten 1 bzw. die Seitenwände 3 und der Boden 4 sind aus einem Material gefertigt, welches typischerweise für Flaschenkästen eingesetzt wird, z. B. Polyolefine, Polyethylen oder Polypropylen. Der Kasten kann dabei einstückig aus diesem Material oder mehrteilig durch Verschweißen entsprechender Einzelteile hergestellt sein.

Erfindungsgemäß ist an dem Flaschenkasten 1 an der Seitenwand 3 ein flächiger Bereich 5, der zumindest teilweise um die Griffmulde 2 angeordnet ist, vorgesehen, in den ein weiterer, zu dem oder den Kunststoffen, aus denen die Seitenwände 3 oder der Boden 4 gebildet sind, unterschiedlicher Kunststoff eingespritzt ist. Da sich im gezeigten Ausführungsbeispiel der Bereich mit dem zweiten, aufgespritzten Kunststoff nicht nur über die Außenseite des Flaschenkastens 1 erstreckt, sondern auch den Innenbereich des Flaschenkastens sowie die seitlichen und oberen Begrenzungen der Griffmulde 2 einschließt, wird durch den zweiten aufgespritzten Kunststoffbereich 5 ein Griffteil ausgebildet, welches sich zusätzlich auch flächig entlang der äußeren und inneren Fläche der Seitenwand 3 erstreckt.

Dieser zweite Kunststoff weist im vorliegenden, bevorzugten Ausführungsbeispiel ein gummiähnliches Verhalten auf, und weist somit durch die größere Elastizität und geringere Festigkeit bzw. Härte ein weiches Griffverhalten auf. Damit wird der Tragekomfort des Flaschenkastens erheblich gesteigert, da der Träger des Flaschenkastens einen weichen, angenehmen Griff vorfindet. Durch die großflächige Aufbringung im Bereich 5 auf der Seitenwand 3 wird weiterhin auch eine gestalterische Wirkung erzielt, die insbesondere bei unterschiedlicher farbiger Ausbildung des zweiten Kunststoffs gegenüber dem ersten Kunststoff dem Flaschenkasten ein ansprechendes Äußeres verleiht.

Zur Erleichterung des Aufspritzens des zweiten Kunststoffs im Bereich 5 und um insbesondere ein sauberes äußeres Erscheinungsbild zu gewährleisten ist der Aufspritzbereich 5 durch eine umlaufende Dichtleiste 7 begrenzt, die bei dem gezeigten Ausführungsbeispiel als leicht von der Seitenwand 3 hervorstehender Steg ausgebildet ist. Dieser Steg 7 gewährleistet, dass mit einer über der Seitenwand 3 angeordneten Spritzgussform über den Steg 7 eine Abdichtung stattfindet, so dass der aufzuspritzende Kunststoff lediglich im Bereich 5 angeordnet wird. Damit ist zum einen eine einfache Herstellbarkeit als auch ein qualitativ hochwertiges Erscheinungsbild gewährleistet. Diese Dichtmaßnahme ist sehr wesentlich, um eine trennscharfe Abgrenzung der beiden Kunststoffflächen bzw. Kunststoffmassen zu erhalten, da die angespritzte Schmelze flüssig ist und ein Übergreifen auf andere Flächenbereiche des Kastens ausgeschlossen werden soll. Hierbei ist zu bedenken, dass das Anspritzen bzw. Aufspritzen unter Druck erfolgt. Die als Dichtlippe ausgebildete Dichtleiste ist geeignet einen Austritt oder ein Überlaufen der Schmelze über den für das Anspritzen bzw. Aufspritzen gewählten Bereich zu gewährleisten. Die Dichtlippe kann hierbei auch beliebig konturiert sein, etwa eine Schräge oder Rundung zum übrigen Flächenbereich aufweisen, so jedenfalls eine trennscharfe Kammerung der angespritzten Masse auf den gewünschten Anformbereich gewährleistet ist.

Bei dem gezeigten Ausführungsbeispiel ist weiterhin bei 6 ein Angusskanal in der Seitenwand 3 ausgebildet, der seine Eintrittsöffnung an der Oberseite der Seitenwand 3 und seine Austrittsöffnungen im Bereich 5 an der Innen- und Außenseite der Seitenwand 3 hat. Damit ist es in einfacher Weiser möglich, an der Innen- und Außenseite der Seitenwand 3 eine Spritzgussform z. B. in Form einer Platte, die mit der Dichtleiste 7 abschließt, anzubringen und von der Oberseite der Seitenwand 3 den zweiten aufzuspritzenden Kunststoff einzuspritzen. Dieser füllt dann den Raum zwischen der bzw. den Spritzgussformen in Form einer vorgesetzten Platte und dem gegenüber der Dichtleiste (7) zurückgesetzten Bereich 5 der Seitenwand 3 aus.

## Patentansprüche

1. Flaschenkasten, mit einem Boden (4) und Seitenwänden (3), welche mindestens aus einem ersten Kunststoff gebildet sind, wobei mindestens an einer Seitenwand (3) mindestens ein Bereich (5) aus einem zweiten Kunststoff stoffschlüssig mit dem ersten Kunststoff verbunden ist, wobei der zweite Kunststoff flächig auf den ersten Kunststoff an- oder aufgespritzt ist und zwar in einem Bereich (5), der durch eine Dichtleiste (7) begrenzt ist, die durch eine von der Seitenwand (3) hervorstehenden Dichtlippe gebildet ist und eine trennscharfe Abgrenzung der beiden Kunststoffe bildet.

2. Flaschenkasten nach Anspruch 1, **dadurch gekennzeichnet, dass** der zweite Kunststoff zu dem ersten Kunststoff unterschiedlich ist.

3. Flaschenkasten nach Anspruch 1 oder 2, **dadurch gekennzeichnet, dass** der zweite Kunststoff auf einer und/oder beiden Seiten des ersten Kunststoffs in einer Dicke von 0,1 - 10 mm, vorzugsweise 0,5 - 5 mm angeordnet ist.

4. Flaschenkasten nach einem der vorhergehenden Ansprüche, **dadurch gekennzeichnet, dass** der zweite Kunststoff flächig um eine Griffmulde (2) im ersten Kunststoff herum gespritzt ist.

5. Flaschenkasten nach einem der vorhergehenden Ansprüche, **dadurch gekennzeichnet, dass** der zweite Kunststoff in einem Bereich auf den ersten Kunststoff aufgespritzt ist, der eine Rippen- oder Lamellenstruktur aufweist, wobei die Rippen oder Lamellen von dem zweiten Kunststoff umschlossen und vorzugsweise flächig oder eben überdeckt sind.

6. Flaschenkasten nach einem der vorhergehenden Ansprüche, **dadurch gekennzeichnet, dass** der erste Kunststoff Öffnungen aufweist, die von dem insbesondere beidseitig des ersten Kunststoffs angeordneten zweiten Kunststoff durchdrungen werden.

7. Flaschenkasten nach einem der vorhergehenden Ansprüche, **dadurch gekennzeichnet, dass** der erste Kunststoff einen Angusskanal (6), insbesondere im Bereich des Griffstegs, aufweist, durch den der zweite Kunststoff, insbesondere beidseitig im Bereich der Griffmulde aufgespritzt wird.

8. Flaschenkasten nach einem der vorhergehenden Ansprüche, **dadurch gekennzeichnet, dass** der erste und der zweite Kunststoff durch ineinander greifende Rippen, Zähne und dgl. miteinander verzahnt sind.

9. Flaschenkasten nach einem der vorhergehenden Ansprüche, **dadurch gekennzeichnet, dass** der zweite Kunststoff ein Griffteil des Behälters bildet und derart ausgebildet ist, dass durch ein gummiähnliches Verhalten ein weiches Griffverhalten erzeugt wird.

10. Flaschenkasten nach einem der vorhergehenden Ansprüche, **dadurch gekennzeichnet, dass** der zweite Kunststoff ein Griffteil des Behälters bildet, welches im wesentlichen eine glatte Oberfläche, insbesondere eine der Handform angepasste Oberflächenausbildung aufweist.

11. Flaschenkasten nach einem der vorhergehenden Ansprüche, **dadurch gekennzeichnet, dass** der erste Kunststoff mit Durchbrechungen, insbesondere Durchgangsöffnungen für die Verankerung mit dem zweiten Kunststoff versehen ist.

12. Flaschenkasten nach einem der vorhergehenden Ansprüche, **dadurch gekennzeichnet, dass** der zweite Kunststoff sich gegenüber dem ersten Kunststoff in seinen chemischen und/oder physikalischen Eigenschaften, insbesondere hinsichtlich Härte, Dehnbarkeit, Schlagzähigkeit, Festigkeit, Farbe, Zusammensetzung oder dgl. unterscheidet.

13. Verfahren zur Herstellung eines Flaschenkastens mit einem Boden (4) und Seitenwänden (3) nach einem der vorhergehenden Ansprüche, wobei mindestens eine Seitenwand (3) aus einem ersten Kunststoffhergestellt wird, die mindestens eine Seitenwand (3) einen Teil der Form für das Spritzgießen bildet und ein zweiter Kunststoff in den Hohlraum zwischen Spritzgussform und erstem Kunststoff eingespritzt wird, wobei der zweite Kunststoff in einem Bereich (5) auf den ersten Kunststoff auf- oder angespritzt wird, der durch eine durch eine hervorstehende Dichtlippe gebildete Dichtleiste (7) begrenzt ist und der Flaschenkasten nach ausreichender Härtung des zweiten Kunststoffs von der Spritzgussform getrennt wird.

## Claims

1. Bottle crate with bottom (4) and side walls (3) made of at least one first plastic material, at least one region (5) which consists of a second plastic material being joined by adhesive force to the first plastic material on at least one side wall (3), the second plastic material being flatly applied to the first plastic material by injection overmoulding in a region (5) bounded by a sealing strip (7) formed by a sealing lip jutting from the side wall (3) and forming a distinct boundary between the two plastic materials.

2. Bottle crate according to Claim 1, **characterized in that** the second plastic material is different from the first plastic material.

3. Bottle crate according to Claim 1 or Claim 2, **characterized in that** the second plastic material is placed on one or both sides of the first plastic material in a thickness of 0.1-10 mm, preferably 0.5 - 5 mm.

4. Bottle crate according to any one of the preceding claims, **characterized in that** the second plastic material is injection moulded flatly around a grip recess (2) in the first plastic material.

5. Bottle crate according to any one of the preceding claims, **characterized in that** the second plastic material is injection overmoulded on to the first plastic material in a region which has a ribbed or finned structure, the ribs or fins being surrounded by, and preferably flatly embedded in, the second plastic material.

6. Bottle crate according to any one of the preceding claims, **characterized in that** the first plastic material has openings which are penetrated by the second plastic material, which is placed in particular on both sides of the first plastic material.

7. Bottle crate according to any one of the preceding claims, **characterized in that** the first plastic material has a sprue (6), in particular in the region of the grip web, through which the second plastic material, which is placed in particular on both sides in the region of the grip recess, is overmoulded.

8. Bottle crate according to any one of the preceding claims, **characterized in that** the first and second plastic materials have interlocking ribs, teeth or the like.

9. Bottle crate according to any one of the preceding claims, **characterized in that** the second plastic material forms a handle of the container and is designed to produce a soft handling effect by virtue of a rubber-like characteristic.

10. Bottle crate according to any one of the preceding claims, **characterized in that** the second plastic material forms a handle of the container which substantially has a smooth surface, and in particular a surface configuration adapted to the shape of the hand.

11. Bottle crate according to any one of the preceding claims, **characterized in that** the first plastic material is provided with through perforations, in particular through openings for anchorage to the second plastic material.

12. Bottle crate according to any one of the preceding claims, **characterized in that** the second plastic material differs from the first plastic material in its chemical and/or physical properties, in particular in respect of hardness, stretchability, impact toughness, strength, colour, composition or the like.

13. Process for the production of a bottle crate with a bottom (4) and side walls (3) according to any one of the preceding claims, wherein at least one side wall (3) is produced from a first plastic material, the at least one side wall (3) forms part of the mould for the injection moulding, a second plastic material is injected into the cavity between the injection mould and the first plastic material, the second plastic material is injection overmoulded on to the first plastic material in a region (5) which is bounded by a sealing strip (7) formed by a projecting sealing lip, and the bottle crate is parted from the injection mould once the second plastic material has sufficiently set.

## Revendications

1. Casier à bouteilles comprenant un fond (4) et des parois latérales (3) qui sont formés au moins à partir d'une première matière plastique, au moins une région (5) en une deuxième matière plastique étant reliée solidement, au niveau d'une paroi latérale (3), à la première matière plastique, la deuxième matière plastique étant appliquée ou projetée en nappe sur la première matière plastique c'est-à-dire dans une région (5) délimitée par une baguette d'étanchéité (7) qui est formée par une lèvre d'étanchéité saillant de la paroi latérale (3) et qui forme une séparation efficace entre les deux matières plastiques.

2. Casier à bouteilles selon la revendication 1, **caractérisé en ce que** la deuxième matière plastique est différente de la première matière plastique.

3. Casier à bouteilles selon la revendication 1 ou 2, **caractérisé en ce que** la deuxième matière plastique est disposée sur un côté et/ou des deux côtés de la première matière plastique avec une épaisseur de 0,1 à 10 mm, de préférence 0,5 à 5 mm.

4. Casier à bouteilles selon l'une des revendications précédentes, **caractérisé en ce que** la deuxième matière plastique est projetée en nappe autour d'une cavité de préhension (2) ménagée dans la première matière plastique.

5. Casier à bouteilles selon l'une des revendications précédentes, **caractérisé en ce que** la deuxième matière plastique est appliquée sur la première matière plastique dans une région qui présente une structure nervurée ou lamellée, les nervures ou les lamelles étant entourées par la deuxième matière plastique et recouvertes de préférence en nappe ou de façon plane.

6. Casier à bouteilles selon l'une des revendications précédentes, **caractérisé en ce que** la première matière plastique présente des ouvertures qui sont traversées par la deuxième matière plastique disposée notamment des deux côtés de la première matière plastique.

7. Casier à bouteilles selon l'une des revendications précédentes, **caractérisé en ce que** la première matière plastique présente un canal d'injection (6), notamment dans la région de la barrette de préhension, permettant d'appliquer la deuxième matière plastique, notamment des deux côtés dans la région de la cavité de préhension.

8. Casier à bouteilles selon l'une des revendications précédentes, **caractérisé en ce que** la première matière plastique et la deuxième matière plastique sont imbriquées l'une dans l'autre par des nervures, des dents ou analogues s'engageant l'un dans l'autre.

9. Casier à bouteilles selon l'une des revendications précédentes, **caractérisé en ce que** la deuxième matière plastique forme une pièce de préhension du conteneur et est conformée de façon à obtenir un mode de préhension souple comme du caoutchouc.

10. Casier à bouteilles selon l'une des revendications précédentes, **caractérisé en ce que** la deuxième matière plastique forme une pièce de préhension du conteneur qui présente sensiblement une surface lisse, notamment une conformation de surface adaptée à la forme de la main.

11. Casier à bouteilles selon l'une des revendications précédentes, **caractérisé en ce que** la première matière plastique est dotée de fenêtres, notamment d'ouvertures de passage permettant d'ancrer la deuxième matière plastique.

12. Casier à bouteilles selon l'une des revendications précédentes, **caractérisé en ce que** la deuxième matière plastique se distingue de la première matière plastique par ses propriétés chimiques et/ou physiques, notamment quant à la dureté, l'élasticité, la résistance aux chocs, la solidité, la couleur, la composition ou analogue.

13. Procédé de fabrication d'un casier à bouteilles comportant un fond (4) et des parois latérales (3) selon l'une des revendications précédentes, au moins une paroi latérale (3) étant fabriquée à partir d'une première matière plastique, l'au moins une paroi latérale (3) formant une partie du moule destiné au moulage par injection et une deuxième matière plastique étant injectée dans la cavité ménagée entre le moule de moulage par injection et la première matière plastique, la deuxième matière plastique étant appliquée ou projetée sur la première matière plastique dans une région (5) qui est délimitée par une baguette d'étanchéité formée par une lèvre d'étanchéité saillante (7) et le casier à bouteilles étant séparé du moule de moulage par injection après un durcissement suffisant de la deuxième matière plastique.
